# EUROPÄISCHE PATENTSCHRIFT

(11) **EP 1 685 316 B1**
(45) Veröffentlichungstag und Bekanntmachung des Hinweises auf die Patenterteilung: **13.12.2006**
(21) Anmeldenummer: 04790669.8
(22) Anmeldetag: 20.10.2004
(51) Int. Cl.: F02B 41/10

(54) **VERFAHREN ZUR OPTIMIERUNG DES NUTZUNGSGRADES IN EINER ANTRIEBSEINHEIT UND ANTRIEBSEINHEIT**
METHOD FOR OPTIMIZING THE UTILIZATION RATIO IN A DRIVE UNIT AND DRIVE UNIT
PROCEDE POUR OPTIMISER LE DEGRE D'UTILISATION DANS UNE UNITE D'ENTRAINEMENT, ET UNITE D'ENTRAINEMENT

(30) Priorität: 22.10.2003 DE 10348967
(43) Veröffentlichungstag der Anmeldung: 02.08.2006
(73) Patentinhaber: Voith Turbo GmbH & Co. KG, 89522 Heidenheim (DE)
(72) Erfinder: VOGELSANG, Klaus, 74564 Crailsheim (DE); ADLEFF, Kurt, 74564 Crailsheim (DE); PITTIUS, Reinhold, 74564 Crailsheim (DE)
(74) Vertreter: Dr. Weitzel & Partner
(86) Internationale Anmeldenummer: PCT/EP2004/011861
(87) Internationale Veröffentlichungsnummer: WO 2005/040578

(56) Entgegenhaltungen:
- EP-A- 0 301 547
- WO-A-02/070877
- US-A- 4 748 812

## Beschreibung

Die Erfindung betrifft ein Verfahren zur Optimierung des Nutzungsgrades in einer Antriebseinheit, insbesondere der Motorbremswirkung, im Einzelnen mit den Merkmalen aus dem Oberbegriff des Anspruches 1; ferner eine Antriebseinheit.

Antriebseinheiten in Turbocompound-Ausführungen sind in einer Vielzahl von Ausführungen aus dem Stand der Technik bekannt. Diese beinhalten die Abgasenergienutzung. Stellvertretend wird auf DE 195 16 971 verwiesen, welche eine Antriebseinheit mit einer Verbrennungskraftmaschine in Turbocompound-Ausführung beschreibt. Bei dieser Einheit ist eine Abgasnutzturbine vorgesehen, welche dem Turbolader nachgeschaltet ist und die im Traktionsbetrieb aus der Abgasleitung des Verbrennungsmotors beaufschlagt wird. Diese steht dabei über eine wenigstens eine hydrodynamische Kupplung umfassende Übertragungseinrichtung mit der Kurbelwelle in Triebverbindung. Auf diese Weise wird es möglich, die im Abgas noch vorhandene Restenergie auszunutzen. Dabei wird in der Abgasnutzturbine die Abgasenergie in Drehenergie umgesetzt und mittels dieser der Antrieb der Kurbelwelle des Fahrzeuges zusätzlich unterstützt. Durch die Ausnutzung der Abgasenergie zum Antrieb des Fahrzeuges kann der Wirkungsgrad des Antriebsstranges vergrößert werden. Ferner ist es bekannt, dass auch die Motorbremsleistung eines Fahrzeuges erhöht werden kann, wenn die Antriebsmaschine, das heißt die Verbrennungskraftmaschine, mit einer sogenannten Kompressionsbremseinrichtung oder allgemein auch Motorbremse genannt, ausgerüstet ist. Mittels dieser wird die Verbrennungskammer der Verbrennungskraftmaschine im Bremsmodus während des letzten Abschnittes des Verdichtungstaktes mit dem Abgassystem verbunden, beispielsweise durch Öffnen der vorhandenen Abgasventile. Das Ergebnis ist, dass verdichtete Luft während des Verdichtungshubes aus dem Zylinder ausströmt und die während des Verdichtungshubs geleistete Verdichtungsarbeit während des Expansionshubes nicht wieder eingebracht wird, was somit zu einer Zunahme der Bremsleistung der Verbrennungskraftmaschine führt. Dieser wirkt jedoch unter Umständen die durch die Kopplung zwischen Abgasnutzturbine und Verbrennungskraftmaschine gegebene Leistungszufuhr zur Verbrennungskraftmaschine entgegen. Bei der Motorbremsung mit einem sogenannten Turbocompound-Verbrennungsmotor ist es daher wünschenswert, im Bremsbetrieb die der Kurbelwelle über die Kopplung mit der Abgasnutzturbine zugeführte Zusatzenergie, die an der Abgasnutzturbine aufgrund der Dekompression des Verbrennungsmotors anfällt, zu eliminieren oder zumindest zu minimieren. Bekannt sind dabei Maßnahmen in der Abgasleitung, wie zum Beispiel Bypassinstallationen, um die Gasbeaufschlagung der Abgasnutzturbine im Bremsbetrieb zu minimieren. Zum Beispiel wird in WO-02070877 der Abgasstrom umgeleitet, so daß er die Turbine nicht beaufschlagt. Die Funktionszustände der Antriebseinheit können im Wesentlichen in drei Grundzustände unterteilt werden. Diese umfassen als erstes den Lastbereich, der durch eine hohe Abgasmenge charakterisiert ist, die der Abgasnutzturbine zur Verfügung gestellt werden kann. Die Abgasnutzturbine wird dann durch den Abgasstrom angetrieben und liefert über die Übertragungseinrichtung, d. h. die Kopplung zur Kurbelwelle Leistung an diese. Dies hat einen positiven Effekt auf den Motorwirkungsgrad. Im Teillastbereich beziehungsweise Schubbetrieb mit geringer Abgasmenge reicht jedoch die im Abgas enthaltene Energie nicht aus, die Abgasnutzturbine auf die der Drehzahl der Verbrennungskraftmaschine entsprechende Drehzahl unter Berücksichtigung der Übersetzung in der Verbindung zur Kurbelwelle zu beschleunigen. Durch die Übertragungseinrichtung ist dabei eine Kopplung gegeben, wodurch die Abgasnutzturbine von der Kurbelwellenseite her beschleunigt wird. Die Leistung wird von der Kurbelwelle zur Abgasnutzturbine geleitet, was sich jedoch negativ auf den Motorwirkungsgrad auswirkt. Dies gilt in Analogie auch für den dritten Betriebszustand, den Bremsbetrieb mit Motorbremse. Bei diesem wird die Nutzturbine durch den erhöhten Abgasstrom angetrieben und die Leistung wird von der Abgasnutzturbine zur Kurbelwelle übertragen, was jedoch wiederum einen negativen Effekt auf die Bremswirkung hat.

Der Erfindung liegt daher die Aufgabe zugrunde, ein Verfahren zur Optimierung des Nutzungsgrades, insbesondere des Wirkungsgrades und/oder der Motorbremswirkung je nach Betriebszustand - zu schaffen beziehungsweise eine Antriebseinheit der eingangs genannten Art derart weiterzuentwickeln, dass diese Nachteile vermieden werden und insbesondere im Teillastbetrieb sowie im Bremsbetrieb die Negativauswirkungen auf den Motorwirkungsgrad beziehungsweise die beabsichtigte Bremswirkung verhindert werden. Dabei ist je nach Betriebsweise immer auf eine optimale Motorbremswirkung oder einen optimalen Wirkungsgrad abzustellen. Der konstruktive und steuerungstechnische Aufwand ist dabei möglichst gering zu halten.

Die erfindungsgemäße Lösung ist durch die Merkmale der Ansprüche 1 und 10 charakterisiert. Vorteilhafte Ausgestaltungen sind in den Unteransprüchen wiedergegeben.

Eine Antriebseinheit mit einer Verbrennungskraftmaschine mit einer Kurbelwelle sowie einer Abgasleitung und einer von der Abgasleitung beaufschlagbaren, dem Verbrennungsmotor nachgeschalteten Abgasturbine sowie eine zwischen Kurbelwelle und Abgasnutzturbine angeordnete hydrodynamische Kupplung ist erfindungsgemäß derart konzipiert, dass die hydrodynamische Kupplung unter Berücksichtigung der jeweiligen Übersetzung der Übertragungselemente zwischen hydrodynamischer Kupplung und Abgasnutzturbine und hydrodynamischer Kupplung und Kurbelwelle derart ausgestaltet ist, dass diese geeignet ist, im Teillastbetrieb unter Berücksichtigung der Übersetzung zwischen Primärrad und Abgasnutzturbine ein Moment zu übertragen, das einem minimal aufnehmbaren Moment Mₘᵢₙ₋₅ der Abgasnutzturbine bei geringer Drehzahl entspricht und ferner im Betriebszustand Bremsbetrieb mit Motorbremse bei maximaler Drehzahl der Abgasnutzturbine ein minimales Moment aufnimmt. Dies bedeutet, dass in den beiden Betriebszuständen die hydrodynamische Kupplung, welche frei von einem Leitrad ist, durch eine Kennlinie charakterisiert ist, die sich durch ein geringes übertragbares Moment über den gesamten Betriebsbereich, insbesondere Drehzahldifferenzbereich der hydrodynamischen Kupplung auszeichnet. Dies kann erfindungsgemäß gemäß einem ersten Lösungsansatz durch die Verwendung einer hydrodynamischen Kupplung mit unveränderlichem Kennfeld in den einzelnen Betriebszuständen erzielt werden. Bei derartigen Kupplungen handelt es sich in der Regel um nicht steuerbare beziehungsweise regelbare Kupplungen. Dies bedeutet, diese weisen einen festen Füllungsgrad auf. Dieser Füllungsgrad bedingt über das Drehzahlverhältnis zwischen dem Sekundärrad und dem Primärrad ein bestimmtes übertragbares Moment, welches dann dem an der Abgasnutzturbine aufnehmbaren Moment bei direkter Kopplung entspricht oder aber bei Kopplung über die Übertragungselemente proportional zu diesen ist. Dies gilt in Analogie für die Drehzahl. Die hydrodynamische Kupplung wird in Abhängigkeit der verwendeten Abgasnutzturbine ausgewählt, wobei dabei entsprechend der Kennlinien der Abgasnutzturbine als anzustrebende einzustellende Drehzahlen die Grenzdrehzahl zum Schutz vor Überlastung, die der maximal zulässigen Drehzahl entspricht, welche im Kennfeld der Abgasnutzturbine dem Überdrehzahlpunkt entsprechen kann und die minimal zulässige Drehzahl vorgegeben werden, wobei in beiden Arbeitspunkten das Drehmoment der Abgasnutzturbine vorzugsweise, jedoch nicht zwingend identisch ist und einem geringen, vorzugsweise minimalen Wert entspricht. Das übertragbare Moment durch die hydrodynamische Kupplung beziehungsweise das durch diese abstützbare Moment ist dabei eine Funktion des minimalen Drehmomentes an der Abgasnutzturbine sowie der maximal zulässigen Drehzahl der Abgasnutzturbine und einer minimalen Drehzahl sowie der Übersetzung i in der zwischen Abgasnutzturbine und hydrodynamischer Kupplung angeordneten Übertragungseinheit.

Gemäß einem zweiten Lösungsansatz wird das geforderte Übertragungsverhalten an der hydrodynamischen Kupplung eingesteuert, vorzugsweise geregelt. Als Stellgröße fungiert dabei der Füllungsgrad der hydrodynamischen Kupplung, der veränderlich ist. Die Einstellung des Füllungsgrades ist dann Bestandteil einer Steuerung beziehungsweise Regelung eines Arbeitspunktes der Abgasnutzturbine. Vorzugsweise erfolgt dabei jeweils die Regelung einer an der Abgasnutzturbine einzustellenden Drehzahl, im Bremsbetrieb einer maximalen zulässigen Grenzdrehzahl und im Teillastbetrieb einer minimalen Drehzahl, wobei beide durch ein vordefiniertes, vorzugsweise dem Minimalmoment entsprechendes minimales bereitzustellendes Moment charakterisiert sind. Bei der maximal zulässigen Drehzahl handelt es sich, wie bereits mehrfach ausgeführt, vorzugsweise um die den Überdrehzahlpunkt im Kennfeld der Abgasnutzturbine charakterisierende Drehzahl. Bei der minimalen Drehzahl handelt es sich dabei um eine Drehzahl bei minimal übertragbarem Moment, welches vorzugsweise jedoch nicht zwingend dem Moment entspricht, welches auch bei maximal zulässiger Grenzdrehzahl übertragbar ist. Der Füllungsgrad wird dabei eingestellt, wobei die Füllungsgradbeeinflussung auf unterschiedliche Art und Weise erfolgen kann und im Einzelnen von der konkreten konstruktiven Ausgestaltung der hydrodynamischen Kupplung und des diesem zugeordneten Betriebsmittelversorgungssystem abhängt. So weist zum Beispiel die hydrodynamische Kupplung immer mindestens einen Eintritt und einen Austritt aus dem Arbeitsraum auf. Diese sind mit dem Betriebsmittelversorgungssystem gekoppelt. Dabei kann im einfachsten Fall der Füllungsgrad über die Steuerung beziehungsweise Einstellung der Drücke am Eintritt und/oder Austritt eingestellt werden. Eine weitere Möglichkeit besteht in der Einstellung eines bestimmten Volumenstromes am Eintritt beziehungsweise Austritt sowie ein auf einen den Austritt und Eintritt verbindenden externen Kreislauf, der auch zum Betriebsmittelumlauf, beispielsweise zum Zwecke der Kühlung benutzt wird, wirkender Überlagerungsdruck, wobei jedoch in diesem Fall zusätzliche Maßnahmen vorzusehen sind, um die entsprechende Druckfortpflanzung zu erzielen. Des Weiteren denkbar sind mechanische Einrichtungen zur Beeinflussung des Füllungsgrades, beispielsweise Schöpfrohre, die ebenfalls zur Steuerung des Volumenstromes dienen, indem diese mit einer Zwischenspeichereinrichtung für Betriebsmittel gekoppelt sind und ferner mit dem Einlass beziehungsweise Eintritt in den Arbeitsraum. Die Stellung des Schöpfrohres kann fest oder aber variabel sein. Die erfindungsgemäße Lösung zur Einstellung der Arbeitspunkte der Abgasnutznutzturbine ist dabei auf keine dieser Maßnahme beschränkt.

Um den Nutzungsgrad, unter welchem je nach Betriebszustand die Motorbremseinwirkung oder der Wirkungsgrad verstanden werden kann, zu optimieren, wird dabei die Abgasnutzturbine derart angesteuert, dass diese im Betriebszustand Teillastbereich mit minimaler Drehzahl und minimal aufnehmbaren Drehmoment betrieben wird, während im Betriebszustand Bremsbetrieb die Abgasnutzturbine mit maximaler Drehzahl mit minimalem abgebbaren Moment betrieben wird. Dies kann durch Steuerung oder vorzugsweise durch eine Regelung der entsprechenden Drehzahl für eine Abgasnutzturbine mit parabelförmiger Kennlinie erfolgen. Andere Kennlinien sind je nach Ausgestaltung der Kupplung ebenfalls denkbar.

Die erfindungsgemäße Lösung wird nachfolgend anhand von Figuren erläutert. Darin ist im Einzelnen Folgendes dargestellt:
- Figur 1 und 1b: verdeutlichen in schematisch vereinfachter Darstellung den Grundaufbau einer erfindungsgemäß gestalteten Antriebseinheit;
- Figur 2a und 2b: verdeutlichen in schematisch vereinfachter Darstellung das erfindungsgemäße Verfahren zur Optimierung der Motorbremswirkung im Betriebzustand Bremsen mit Motorbremse anhand von Signalflussbildern;
- Figur 3a und 3b: Kupplungskennlinie, insbesondere Pumpenkennlinie für eine erfindungsgemäß verwendete Kupplung mit festem Füllungsgrad und variablem Füllungsgrad;
- Figur 4: verdeutlicht das erfindungsgemäße Verfahren im Betriebszustand Teillast oder Schubbetrieb anhand eines Signalflussbildes;
- Figur 5: verdeutlicht anhand einer Ausführung gemäß Figur 1 die Zuordnung der Steuervorrichtung zu den einzelnen Komponenten im Antriebsstrang.

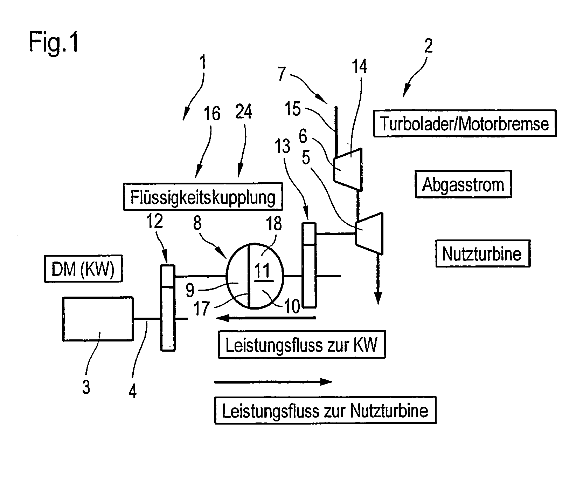

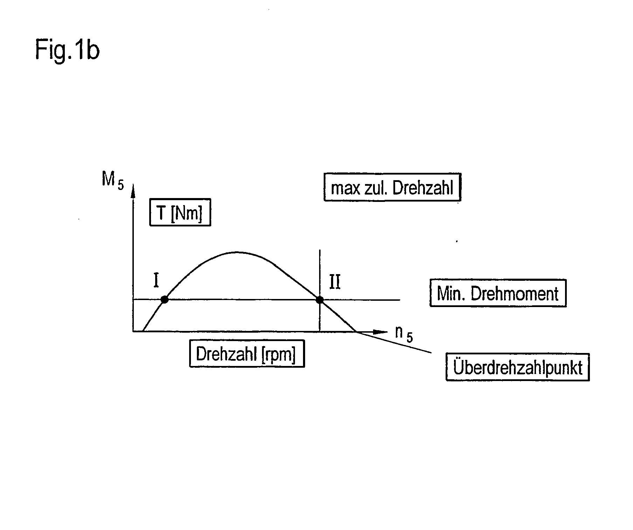

Figur 1 verdeutlicht in schematisch vereinfachter Darstellung anhand eines Ausschnittes aus einem Antriebsstrang 1 den Grundaufbau eines Turbocompoundsystems 2. Der Antriebsstrang umfasst eine Antriebsmaschine in Form einer Verbrennungskraftmaschine 3 und über eine Kurbelwelle.4 Ferner ist eine Abgasnutzturbine 5 vorgesehen, die vom Abgasstrom der Verbrennungskraftmaschine 3 beaufschlagt wird. Diese ist einem Turbolader 6 nachgeschaltet und damit nicht Bestandteil dieses. Die Abgasnutzturbine 5 wird dabei von einer Abgasleitung 7 beaufschlagt. Die Abgasnutzturbine 5 ist ferner mechanisch mit der Kurbelwelle 4 gekoppelt, d. h., sie steht mit ihr über eine Übertragungseinrichtung 16 in Triebverbindung. In der Kopplung zwischen Kurbelwelle 4 und Abgasnutzturbine 5, d. h. der Übertragungseinrichtung 16 ist eine hydrodynamische Kupplung 8 vorgesehen. Diese umfasst ein Primärschaufelrad 10 und ein Sekundärschaufelrad 9, die miteinander einen Arbeitsraum 11 bilden. Die hydrodynamische Kupplung 8 ist dabei frei von einem Leitrad. Das Sekundärschaufelrad 9 ist dabei mit der Kurbelwelle 4 wenigstens mittelbar drehfest, das heißt direkt oder aber über weitere Übertragungselemente, beispielsweise in Form von Drehzahl-/Drehmomentwandlungseinrichtungen in Form von Vorgelegen gekoppelt. Das Primärschaufelrad 10 ist wenigstens mittelbar, das heißt vorzugsweise direkt oder über weitere Übertragungselemente mit der Abgasnutzturbine 5 verbunden. Im dargestellten Fall erfolgt die Kopplung zwischen Sekundärschaufelrad 9 der hydrodynamischen Kupplung 8 und der Kurbelwelle 4 über einen Stirnradzug 12. Die Kopplung zwischen Sekundärrad 9 und Abgasnutzturbine 5 erfolgt über einen weiteren Stirnradzug 13. Denkbar wäre auch die direkte Kopplung oder die Zwischenschaltung anderer oder weiterer Drehzahl-/Drehmomentwandlungseinrichtungen. In beiden Fällen ist in Leistungsflussrichtung von der Kurbelwelle 4 zur Abgasnutzturbine 5 betrachtet die Übersetzung der Stirnradzüge 12 und 13 jeweils als Übersetzung ins Schnelle ausgebildet. Die Abgasnutzturbine 5 ist somit parallel zur Kurbelwelle 4 angeordnet. Denkbar wäre auch eine hier nicht dargestellte Anordnung in einem Winkel, wobei die Übertragungselemente entsprechend zu gestalten wären. Der Abgasnutzturbine 5 ist der Turbolader 6 beziehungsweise die Motorbremse vorgeschaltet. Der Turbolader 6 ist mit einer ersten Turbinenstufe ausgeführt, die mit der Abgasleitung 7 gekoppelt ist und eine Kompressorenstufe 14 in der Einlassleitung 15 antreibt. Die zweite Turbinenstufe, die auf der stromabwärtsliegenden Seite der ersten Turbinenstufe oder beziehungsweise Kompressorstufe 14 angeordnet ist, wird von der Abgasnutzturbine 5 gebildet. Die Funktionsweise der Antriebseinheit 1 würde in konventioneller Ausführung im Wesentlichen durch die nachfolgend genannten Betriebszustände charakterisiert werden. Im ersten Betriebszustand, der auch als Lastbetrieb mit hoher Abgasmenge bezeichnet wird, wird die Abgasnutzturbine 5 durch den Abgasstrom in der Abgasleitung 7 angetrieben und liefert über die Übertragungseinrichtung 16 Leistung an die Kurbelwelle 4. Dies wirkt sich positiv auf den Motorgesamtwirkungsgrad aus. In einem zweiten Betriebszustand, der auch als Teillastbetrieb beziehungsweise Schubbetrieb bezeichnet wird, steht nur eine geringe Abgasmenge in der Abgasleitung 7 zur Verfügung. Die im Abgas enthaltene Energie reicht somit bei konventionellen Antriebseinheiten nicht aus, die Abgasnutzturbine 5 auf die der Drehzahl der Verbrennungskraftmaschine 3 entsprechende Drehzahl n₃ unter Berücksichtigung der Übersetzung in der Übertragungseinrichtung 16, insbesondere zwischen hydrodynamischer Kupplung 8 und Abgasnutzturbine 5 zu beschleunigen. Durch die Triebverbindung zwischen Kurbelwelle 4 und Abgasnutzturbine 5 über die hydrodynamische Kupplung 8 kann die Abgasnutzturbine 5 von der Kurbelwellenseite 4 her beschleunigt werden. Dies führt dazu, dass Leistung von der Kurbelwelle 4 zur Abgasnutzturbine 5 geleitet wird, die für den Normalbetrieb nicht mehr zur Verfügung steht und sich damit negativ auf den Motorwirkungsgrad auswirkt. Der dritte Betriebszustand bei herkömmlichen Antriebssträngen ohne erfindungsgemäße Lösung ist dadurch charakterisiert, dass dieser den Bremsbetrieb mit Motorbremse beschreibt. In diesem wird die Abgasnutzturbine 5 durch einen erhöhten Abgasstrom in der Abgasleitung 7 angetrieben. Die Leistung fließt von der Abgasnutzturbine 5 dann zur Kurbelwelle 4. Dies wirkt sich wiederum negativ auf die Motorbremswirkung aus. Zur Vermeidung der genannten Nachteile wird erfindungsgemäß der Betrieb der Abgasnutzturbine 5 durch Steuerung des Leistungsübertragungsverhaltens in der Übertragungseinrichtung 16 im Hinblick auf den Betriebszustand der Abgasnutzturbine 5 optimiert. Erfindungsgemäß wird dazu im Betriebszustand Bremsbetrieb mit Motorbremse die Abgasnutzturbine 5 derart angesteuert, dass diese mit einer Drehzahl n₅ betrieben wird, die einer maximal zulässigen Drehzahl nₘₐₓ₋₅, d. h. einer sogenannten Grenzdrehzahl n_{Grenz5} der Abgasnutzturbine 5 entspricht. Die Abgasnutzturbine 5 beziehungsweise deren Betriebsweise ist dabei durch eine Kennlinie beschreibbar, bei der das durch diese bereitgestellte Nutzturbinenmoment M₅ kleiner ist als bei niedrigeren Drehzahlen. Die Grenzdrehzahl n_{Grenz5} entspricht dabei der Drehzahl, bei welcher Zerstörungen der Abgasnutzturbine 5 noch mit Sicherheit vermieden werden. Als Stelleinrichtung zur Ansteuerung fungiert dabei die hydrodynamische Kupplung 5. Um die Drehzahl n₅ der Abgasnutzturbine 5 zu begrenzen, muss über die in der Übertragungseinheit 16 integrierte hydrodynamische Kupplung 8 ein Drehmoment abgestützt werden. Dieses Drehmoment wirkt jedoch über die Verbindung zur Kurbelwelle 4 dem Bremsmoment Motorbremse entgegen. Daher ist dieses Bremsmoment erfindungsgemäß minimal zu halten. Da entsprechend der bekannten Kennlinie der Abgasnutzturbine 5 das Drehmoment bei dieser Grenzdrehzahl n_{Grenz5} kleiner ist als bei niedrigeren Drehzahlen, wird angestrebt, die Abgasnutzturbine 5 möglichst häufig in diesem Arbeitspunkt zu betreiben. Die Abgasnutzturbine 5 wird dabei derart angesteuert, dass diese möglichst mit ihrer maximalen Drehzahl nₘₐₓ₅ betrieben wird. Gleichzeitig kann jedoch die Drehzahl der Verbrennungskraftmaschine 3 zwischen der Turbinenseite, das heißt dem Primärrad 10 der hydrodynamischen Kupplung 8 und der Kurbelwellenseite, das heißt dem Sekundärrad 9, verändert werden.

Die Figur 1 b verdeutlicht dazu die Kennlinie der Abgasnutzturbine 5 anhand einer Drehzahl n₅/Drehmoment M₅-Diagrammes. Das Drehmoment M₅ entspricht dabei je nach Leistungsflussrichtung dem durch die Abgasnutzturbine aufnehmbaren Moment oder dem von dieser an die Übertragungseinrichtung abgebbaren Moment. Der vorzugsweise parabelförmige Verlauf ist dabei in Kombination mit dem minimal aufnehmbaren oder abgebbaren Moment durch zwei Arbeitspunkte I und II charakterisiert. Diese gilt es in den angesprochenen Betriebszuständen Teillast oder Schubbetrieb und Motorbremsbetrieb anzusteuern bzw. einzustellen. Dabei wird zur Optimierung des Gesamtsystems im Teillastbetrieb ein Arbeitspunkt im Bereich des Arbeitspunktes I und im Motorbremsbetrieb ein Arbeitspunkt im Bereich des Arbeitspunktes II angestrebt, wobei die Arbeitspunkte durch ein minimales Moment charakterisiert sind. Dies erfolgt im einfachsten Fall durch die automatische Einstellung dieser Arbeitspunkte durch Auswahl der geeigneten hydrodynamischen Kupplung 8 mit festen Füllungsgraden FG in den einzelnen Betriebszuständen, wobei diese für den jeweiligen Betriebszustand unveränderlich sind, jedoch zwischen den einzelnen Betriebszuständen variieren oder durch Steuerung der Drehzahl der Abgasnutzturbine 5 durch Steuerung des Übertragungsverhaltens der hydrodynamischen Kupplung 8, insbesondere des Füllungsgrades FG.

Gemäß dem ersten Lösungsansatz wird eine hydrodynamische Kupplung 8 mit entsprechender Kennlinie gemäß Figur 3a gewählt, wobei diese unveränderlich ist und durch einen konstanten Füllungsgrad der Kupplung 8 charakterisiert wird. Die hydrodynamische Kupplung 8 ist dabei derart ausgelegt, dass diese geeignet ist, bei einem Füllungsgrad FG bestimmter Größe das am Sekundärrad 9 unter Berücksichtigung der Übersetzung der zwischen Abgasnutzturbine 5 und hydrodynamischer Kupplung 8 angeordneten Übertragungselemente, insbesondere Drehzahl/Drehmomentwandlungseinrichtungen, hier des Stirnradzuges 13 anliegende Moment M₁₀ sicher an der hydrodynamischen Kupplung 8 abzustützen. Das Moment M₁₀ ist dabei proportional zum von der Abgasnutzturbine 5 abgegebenen Moment M₅. Die hydrodynamische Kupplung 8 ist dabei derart ausgelegt, dass deren Kennlinie durch das Drehzahlverhältnis zwischen Sekundärrad 9 und Primärrad 10, bezogen auf das vom Primärrad 10 aufnehmbare Moment M₁₀ charakterisiert ist. Dieses Moment entspricht dabei unter Berücksichtigung der Übersetzung des Stirnradzuges 13 beziehungsweise den zwischen Primärrad 10 und Abgasnutzturbine 5 angeordneten Übertragungselementen dem an der Abgasnutzturbine 5 abgebbaren minimalen Drehmoment Mₘᵢₙ₅, das heißt ist zu diesem direkt proportional.

Die hydrodynamische Kupplung 8 wird derart betrieben, dass diese über einen Großteil des Bereiches des Drehzahlverhältnisses zwischen Sekundärrad 9 und Primärrad 10 ein bestimmtes Moment abzustützen kann, welches unter Berücksichtigung der Übertragungselemente dem von der Abgasnutzturbine bereitgestellten minimalen Moment Mₘᵢₙ₋₅ entspricht. Die Kupplung wird mit unveränderlichem Füllungsgrad FG betrieben. Es sind keine zusätzlichen Steuermechanismen erforderlich. Das gewünschte Verhalten wird allein aufgrund der der Kupplung mit festem Füllungsgrad inhärenten Eigenschaften erzielt.

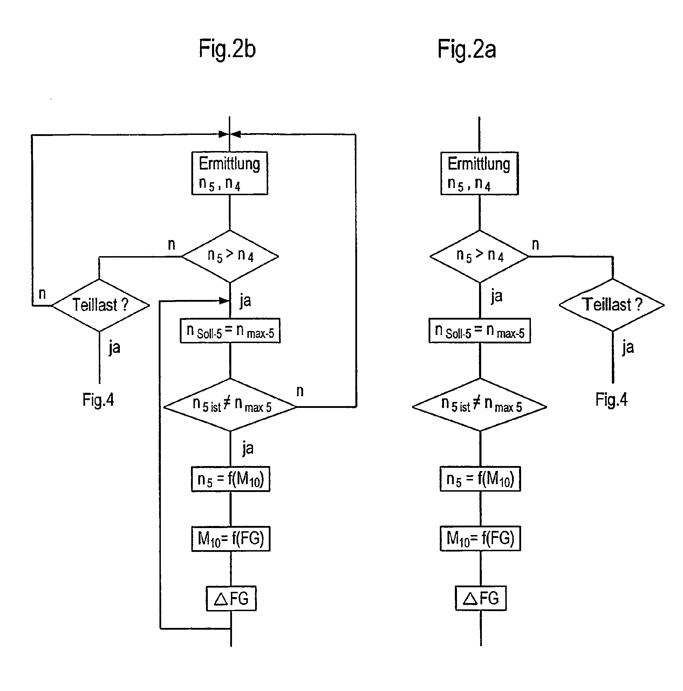

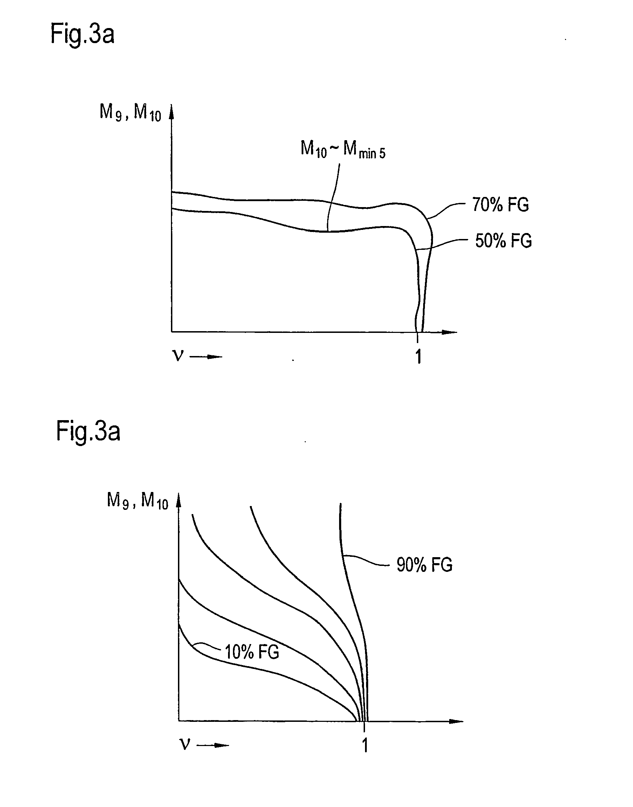

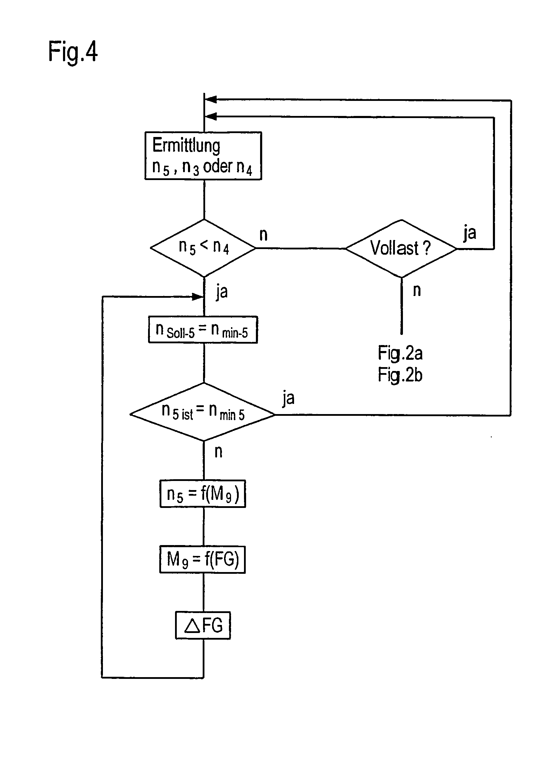

Gemäß einem zweiten Lösungsansatz wird die Übertragungsfähigkeit der Kupplung entsprechend eingestellt. Kupplungskennlinien für Stellkupplungen sind in Figur 3b dargestellt. Diese gelten je nach Leistungsflussrichtung für das am Primärrad 10 oder Sekundärrad 9 aufnehmbare Moment M₁₀, M₉. Vorzugsweise ist diese Vorgehensweise in ein Verfahren zur Regelung der Drehzahl n₅ der Abgasnutzturbine 5, wie in Figur 2b dargestellt, integriert, wobei bei Vorliegen des dritten Betriebszustandes, das heißt Bremsbetrieb mit Motorbremse, der durch eine größere Drehzahl n₅ charakterisiert ist als die Drehzahl unter Berücksichtigung des Übertragungsverhaltens beziehungsweise das Übertragungsmoment an der Kurbelwelle n₄ ein Sollwert nₛₒₗₗ₋₅ gesetzt wird, der der maximal zulässigen Drehzahl nₘₐₓ₋₅ der Abgasnutzturbine 5 entspricht. Diese Drehzahl ist unter Berücksichtigung der Übertragungselemente proportional zur Drehzahl n₁₀ am Primärrad 10 der hydrodynamischen Kupplung 8. Bei der Kennlinie für die Abgasnutzturbine 5 ergibt sich zugehörig zu dieser Drehzahl nₘₐₓ₋₅ ein minimal bereitzustellendes Drehmoment Mₘᵢₙ₋₅. Unter Berücksichtigung der Übertragungselemente zwischen Abgasnutzturbine 5 und Primärrad 10, insbesondere am Stirnradzug 13 ergibt sich damit für das Primärrad 10 ein aufnehmbares Moment M₁₀, welches am Sekundärrad 9 abgestützt werden muss. Um dieses Moment abzustützen, ist die Übertragungsfähigkeit der Kupplung 8 entsprechend vorzugeben. Dies erfolgt durch Einstellung des Füllungsgrades FG. Das heißt die Übertragungsfähigkeit der hydrodynamischen Kupplung 8, insbesondere bei Leistungsübertragung vom Primärrad 10 zum Sekundärrad 9, ergibt sich auch hier durch Beeinflussung des Massestromes, das heißt, des Füllungsgrades FG. Dabei können zur Einstellung des Füllungsgrades FG verschiedene Stellgrößen herangezogen werden. Als diese fungieren beispielsweise bei befüllbaren Kupplungen, die durch einen Eintritt 17 für Betriebsmittel in den Arbeitsraum und wenigstens einen Austritt 18 aus dem Arbeitsraum charakterisiert sind, wenigstens ein Druck p₁₇, ₁₈ am Eintritt und/oder Austritt oder eine Druckdifferenz an diesen beziehungsweise die in diesen Bereichen bereitgestellten Volumenströme *V̇*_{17,18} am Eintritt und/oder Austritt sowie bei Zuordnung eines separaten Betriebsmittelumlaufes, insbesondere geschlossenem Kreislaufes 19 zum Arbeitskreislauf ein statischer Überlagerungsdruck auf diesen sowie alle Maßnahmen zur Änderung der Füllmittelmenge und/oder Beeinflussung der Ströme, beispielsweise variable oder feststehende Schöpfrohre. Die Einstellung des Füllungsgrades FG an der hydrodynamischen Kupplung 8, insbesondere am Arbeitsraum 11, ist dabei in der Ste uerstrecke der Steuerung der Drehzahl n₅ der Abgasnutzturbine integriert. Dies gilt in Analogie auch bei Ausführung des Verfahrens als Regelung. Bei diesem wird die aktuelle Drehzahl an der Abgasnutzturbine nᵢₛₜ₋₅ rückgeführt und entsprechend der Regelabweichung zur Solldrehzahl nₛₒₗₗ₋₅ die hydrodynamische Kupplung 8 entsprechend angesteuert. Die Figur 2a verdeutlicht dabei die Einstellung der Drehzahl der Abgasnutzturbine nᵢₛₜ₋₅ durch eine Steuerung, während Figur 2b die Regelung, d. h. ständige Rückführung und Vergleich der Drehzahlen wiedergibt. Bei den in der Figur 2a und 2b beschriebenen Verfahren können dabei die genannten Größe entweder direkt bestimmt werden oder aber diese wenigstens mittelbar charakterisierende Größen, d. h. durch mit diesen Größen in funktionalem Zusammenhang stehende Größen.

Im zweiten Betriebszustand wird die Drehzahl n₅ an der Abgasnutzturbine 5 erfindungsgemäß auf dem kleinstmöglichen Niveau gehalten. Da jedoch die Drehzahl an der Verbrennungskraftmaschine 3 veränderlich ist, ist es erforderlich, dass in der Kupplung 8 ein hoher Schlupf bei sehr geringem Drehmoment M dargestellt wird. Das heißt, die Verbrennungskraftmaschine 3 dreht unter Berücksichtigung der Übersetzung relativ schneller als die Abgasnutzturbine 5. Dies wird gemäß eines ersten Lösungsansatz durch die hydrodynamische Kupplung 8 mit entsprechend unveränderlicher Kennlinie gemäß Figur 3a für einen beliebigen Füllungsgrad gelöst, wobei diese Kennlinie auch im Hinblick auf den bereits beschriebenen Betriebszustand 3 den entsprechenden Anforderungen genügen muss. Dies bedeutet, dass die hydrodynamische Kupplung 8 mit einem konstanten Füllungsgrad FG betrieben wird, der in Abhängigkeit des Schlupfes, bzw. der Drehzahldifferenz zwischen Sekundärrad 9 und Primärrad 10 durch ein minimales Moment Mₘᵢₙ₋₅ der Abgasnutzturbine charakterisiert ist, welches proportional zu dem über die hydrodynamische Kupplung 8 zu übertragenden Moment ist. Die verwendete hydrodynamische Kupplung 8 ist dabei für beide Betriebzustände, den Betriebszustand 3, das heißt Bremsen mit Motorbremse und den Betriebszustand 2, das heißt dem Teillastbetrieb beziehungsweise Schubbetrieb, konzipiert. Dabei wird eine hydrodynamische Kupplung 8 verwendet, deren Kennfeld durch ein minimales übertragbares Moment M bei einem sehr großen Arbeitsbereich der hydrodynamischen Kupplung 8 charakterisiert ist. Der fest vorgegebene Füllungsgrad FG, der die unveränderliche Kennlinie charakterisiert, ist derart gewählt, dass unter Berücksichtigung der Übertragungselemente zwischen der hydrodynamischen Kupplung 8 und Abgasnutzturbine 5 dann ein minimales Moment von der Abgasnutzturbine von Seiten der Kurbelwelle 4 aufgenommen werden kann. Diese unveränderliche Kupplungskennlinie ist in Figur 3a für beide Betriebszustände dargestellt. Die Figur 3b verdeutlicht demgegenüber die Kennlinie einer gesteuerten oder geregelten hydrodynamischen Kupplung 8.

Die Figur 4 verdeutlicht noch einmal gemäß dem zweiten Lösungsansatz die Steuerung der Übertragungsfähigkeit in Abhängigkeit vom Drehzahlunterschied γ zwischen Abgasnutzturbine 5 und Kurbelwelle 4, insbesondere der Turbinenseite und der Kurbelwellenseite der hydrodynamischen Kupplung 8 für den zweiten Betriebszustand. Auch hier erfolgt gemäß einer ersten Ausführungsmöglichkeit eine Steuerung der Drehzahl der Abgasnutzturbine nₛₒₗₗ₋₅, wobei diese möglichst gering gehalten wird. Diese Drehzahl entspricht dabei vorzugsweise einer unteren minimalen Grenzdrehzahl nₘᵢₙ₋₅ der Abgasn utzturbine 5. Diese wird aus der Kennlinie für die Abgasnutzturbine, insbesondere der Drehmomentendrehzahlkennlinie gemäß Figur 1b, ermittelt. In Abhängigkeit der Größe der Drehzahl n₃ der Antriebsmaschine n₄ oder Kurbelwelle 4, insbesondere der Verbrennungskraftmaschine 3, erfolgt dann zur Einstellung der Drehzahl n₅ an der Abgasnutzturbine 5, beziehungsweise unter Berücksichtigung des Übertragungsverhaltens über die Übertragungselemente, insbesondere den Stirnradzug 13 am Primärrad 10 der hydrodynamischen Kupplung 8 die Einstellung der entsprechend zur Drehzahl an der Abgasnutzturbine 5 proportionalen Drehzahl n₁₀. Dies ist eine Funktion des übertragbaren Momentes M₈ einer hydrodynamischen Kupplung, insbesondere des durch das Sekundärschaufelrad 9 in diesem Betriebszustand von der Kurbelwelle aufnehmbaren Momentes M₉ und der Drehzahl n₉ am Sekundärrad 9, welch e wiederum direkt proportional aufgrund der Kopplung über die Übertragungselemente, insbesondere dem Stirnradsatz 12 zur Drehzahl n₄ der Kurbelwelle 4 ist. Das übertragbare Moment M₈ über die hydrodynamische Kupplung 8 und damit das durch das Sekundärrad 9 aufnehmbaren Momentes M₉ für die Steuerung des übertragbaren Momentes M₈ bzw. der Drehzahl n₁₀ am Primärrad 10 ist dabei eine Funktion des Füllungsgrades FG der hydrodynamischen Kupplung. Der Füllungsgrad FG fungiert auch hier als Stellgröße in der Steuerung, insbesondere der Steuerstrecke, zur Einstellung der minimalen Drehzahl an der Abgasnutzturbine 5 integriert. Dabei kann der Füllungsgrad FG eingesteuert oder aber auch eingeregelt werden. Die Einstellung des Füllungsgrades erfolgt dabei wie bereits beschrieben über die Vorgabe von Stellgrößen für die an Ein- und Auslass einzustellenden Drücke sowie der über diese eingebrachten Volumenströme*V̇*_{17,18} oder aber entsprechender Stelleinrichtungen zur Beeinflussung des Füllungsgrades, beispielsweise variable oder feststehende Schöpfrohre. Ferner denkbar sind Überlaufrohre mit oder ohne nachgeschalteter Ventiltechnik oder beliebige Kombinationen verschiedener bekannter Prinzipien, auf die im Einzelnen hier nicht eingegangen wird, da diese zum Grundwissen des zuständigen Fachmannes gehören.

Gemäß einer besonders vorteilhaften Ausgestaltung erfolgt auch hier die Einstellung der minimal zulässigen Drehzahl nₘᵢₙ₋₅ in Form einer Regelung, das heißt, die aktuelle Ist-Drehzahl an der Abgasnutzturbine nᵢₛₜ₋₅ wird rückgeführt und mit dem Sollwert verglichen. Dabei kann die aktuelle Drehzahl der Nutzturbine nᵢₛₜ₋₅ direkt ermittelt werden, oder aber eine diese wenigstens indirekt beschriebene Größe, wobei diese dann überwacht wird. Im einfachsten Fall erfolgt jedoch eine Drehzahlerfassung, da dies die wenigstens Probleme bereitet. Die Einstellung des Füllungsgrades ist dabei Bestandteil der Regelstrecke.

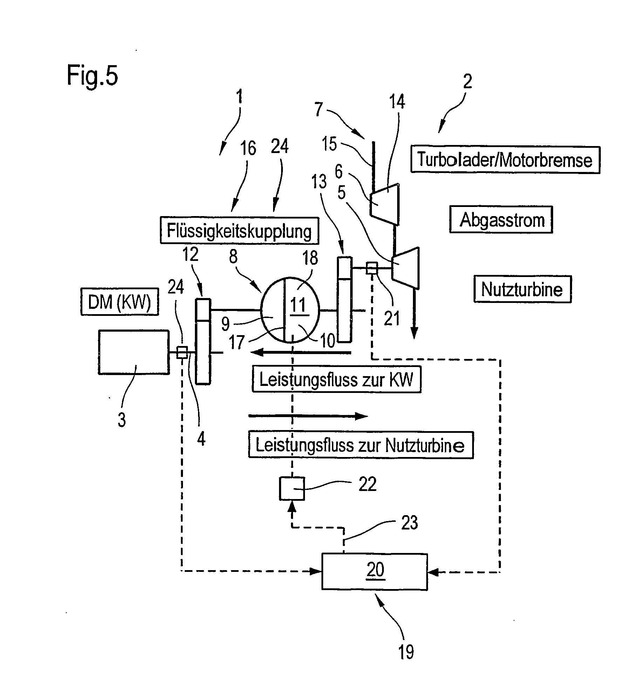

Die Figur 5 verdeutlicht noch einmal in schematisch vereinfachter Darstellung anhand des Grundaufbaus des Antriebsstranges 1 die Zuordnung einer Steuer- und/oder Regelvorrichtung 19 zur Abgasnutzturbine 5, umfassend wenigstens eine als Steuergerät in Form einer baulichen Einheit unter Zusammenfassung der diese Funktion übernehmenden Komponenten oder aber in Form eines virtuellen Steuergerätes vorliegenden Steuer- und/oder Regeleinrichtung 20, die mit wenigstens einer Einrichtung zur Erfassung wenigstens einer, die Drehzahl n₅ und die Drehzahl der Abgasnutzturbine 5 und eine Einrichtung zur Erfassung wenigstens einer, die Drehzahl der Kurbelwelle 4 wenigstens mittelbar beschreibenden Größe gekoppelt ist, wobei diese Einrichtungen hier mit 21 und 24 bezeichnet sind und im einfachsten Fall in Form eines Drehzahlsensors vorliegen. Diese Einrichtungen können ferner bereits ein entsprechendes Eingabesignal für/oder die Regeleinrichtung 20 generieren. Des Weiteren umfasst die Steuer- und/oder Regelvorrichtung 19 eine Stelleinrichtung 22, die der hydrodynamischen Kupplung 8 zugeordnet ist und der Änderung des Übertragungsverhaltens der hydrodynamischen Kupplung 8 dient. Die Stelleinrichtung 22 kann dabei vielgestaltig ausgeführt sein. Dies hängt im Einzelnen von der konkreten Art der Beeinflussung des Füllungsgrades FG der hydrodynamischen Kupplung ab. Die Stelleinrichtung 22 ist dabei mit wenigstens einem Ausgang 23 der Steuer- und/oder Regeleinrichtung 20 gekoppelt. Bei der Steuer- und/oder Regeleinrichtung 20 kann es sich dabei um eine ohnehin in Fahrzeugen vorhandene Steuer- und/oder Regeleinrichtung des Fahrzeuges handeln oder aber Steuer- und/oder Regeleinrichtungen anderer Antriebskomponenten, beispielsweise einer Getriebesteuerung.

### Bezugszeichenliste

- 1: Antriebsstrang
- 2: Turbocompoundsystem
- 3: Antriebsmaschine, Verbrennungskraftmaschine
- 4: Kurbelwelle
- 5: Abgasnutzturbine
- 6: Turbolader
- 7: Abgasleitung
- 8: hydrodynamische Kupplung
- 9: Sekundärschaufelrad
- 10: Primärschaufelrad
- 11: Arbeitsraum
- 12: Stirnrad
- 13: Stirnradzug
- 14: Kompressionsstufe
- 15: Einlassleitung
- 16: Übertragungseinrichtung
- 17: Eintritt
- 18: Austritt
- 19: Steuer- und/oder Regelvorrichtung
- 20: Steuer- und/oder Regeleinrichtung
- 21: Einrichtung zur Erfassung wenigstens einer die Drehzahl der Abgasnutzturbine wenigstens mittelbar beschreibende Größe
- 22: Stelleinrichtung
- 23: Ausgang
- 24: Einrichtung zur Erfassung wenigstens einer die Drehzahl der Kurbelwelle 4 wenigstens mittelbar beschreibenden Größe

## Patentansprüche

1. Verfahren zur Optimierung der Motorbremswirkung in einer Antriebseinheit (1) insbesondere für den Einsatz von Kraftfahrzeugen
- mit einer Verbrennungskraftmaschine (3) umfassend eine Kurbelwelle (4);
- mit einer Abgasnutzturbine (5), die im Abgasstrom (7) der Verbrennungskraftmaschine (3) zur Umwandlung von Abgasenergie in Antriebsenergie angeordnet ist;
- die Abgasnutzturbine (5) ist über eine Übertragungseinrichtung (16) mit der Kurbelwelle (4) verbunden;
- in der Übertragungseinrichtung (16) ist eine hydrodynamische Kupplung (8) angeordnet, umfassend ein Primärrad (10) und ein Sekundärrad (9), wobei das Sekundärrad (9) mit der Kurbelwelle (4) und das Primärrad (10) mit der Abgasnutzturbine (5) wenigstens mittelbar gekoppelt ist;
**gekennzeichnet durch** die folgenden Merkmale:
1.1 bei welchen in einem Betriebszustand, der dem Bremsbetrieb mit Motorbremse entspricht, die Abgasnutzturbine (5) in einem Arbeitspunkt (II) betrieben wird, der **durch** eine maximal zulässige Grenzdrehzahl nₘₐₓ₋₅ der Abgasnutzturbine (5) bei einem minimalem abgebbarem Moment M₅ charakterisiert ist und
1.2 in einem Betriebszustand, welcher dem Teillastbetrieb oder Schubbetrieb entspricht, die Abgasnutzturbine (5) in einem Arbeitspunkt (1) betrieben wird, der **durch** eine minimale Drehzahl nₘᵢₙ₋₅ und minimal aufnehmbarem Moment Mₘᵢₙ₋₅ charakterisiert ist, wobei die Einstellung der beiden Arbeitspunkte über die hydrodynamische Kupplung (8) erfolgt, die derart ausgeführt ist, dass diese geeignet ist, entsprechend wenigstens einer Kennlinie betrieben zu werden, deren übertragbares Moment über einen Großteil der den Schlupfbereich charakterisierenden Drehzahldifferenz unter Berücksichtigung der Übersetzung der Übertragungselemente in der Übertragungseinrichtung (16) zur Abgasnutzturbine (5) dem minimal von der Abgasnutzturbine (5) abgebbarem oder aufnehmbarem Moment M_{Min-5} entspricht.

2. Verfahren nach Anspruch 1, **dadurch gekennzeichnet, dass** eine hydrodynamische Kupplung (8) mit konstanter Füllung FG eingesetzt wird, deren Kennlinie für diesen Füllungsgrad FG durch einen Momentenverlauf charakterisiert ist, der über einen Großteil des Schlupfbereiches im Bereich des unter Berücksichtigung des Übersetzungsverhältnisses in der Übertragungseinrichtung (16) minimalen von der Abgasnutzturbine (5) aufnehmbaren oder abgebbaren Momentes Mₘᵢₙ₋₅ liegt.

3. Verfahren nach Anspruch 1, **dadurch gekennzeichnet, dass** eine hydrodynamische Kupplung (8) verwendet wird, deren Füllungsgrad FG steuer- und/oder regelbar ist.

4. Verfahren nach Anspruch 3, **dadurch gekennzeichnet, dass** die Steuerung und/oder Regelung des Füllungsgrades FG in Abhängigkeit wenigstens einer der nachfolgenden Größen erfolgt:
- Druck an einem Einlass (17) in den Arbeitsraum (11) der hydrodynamischen Kupplung (8) und/oder an einem Auslass (18) aus dem Arbeitsraum (11) der hydrodynamischen Kupplung (8)
- Druckdifferenz (Δₚ) zwischen Einlass (17) und Auslass (18) aus dem Arbeitsraum (11)
- Volumenstrom am Einlass (17) und/oder Auslass (18) aus dem Arbeitsraum (11)
- über mechanische Aggregate, beispielsweise Schöpfrohre abgeführte Menge an Betriebsmittel.

5. Verfahren nach einem der Ansprüche 1 bis 4, **dadurch gekennzeichnet, dass** die Einstellung der Arbeitspunkte (I, II) durch Steuerung der Drehzahl n₅ oder einer, diese wenigstens mittelbar charakterisierende Größe der Abgasnutzturbine (5) erfolgt.

6. Verfahren nach einem der Ansprüche 1 bis 4, **dadurch gekennzeichnet, dass** die Einstellung der Arbeitspunkte (I, II) durch Regelung der Drehzahl n₅ oder einer, diese wenigstens mittelbar charakterisierende Größe der Abgasnutzturbine (5) erfolgt.

7. Verfahren nach Anspruch 6, welche kennzeichnet, dass eine, die Istdrehzahl der Abgasnutzturbine (5) wenigstens mittelbar charakterisierende Größe fortlaufend ermittelt wird und mit der einzustellenden Solldrehzahl nₛₒₗₗ₋₅ verglichen wird, wobei in Abhängigkeit der Regelabweichung eine Stellgröße zur Ansteuerung der hydrodynamischen Kupplung (8) vorgegeben wird.

8. Verfahren nach einem der Ansprüche 1 bis 7, **dadurch gekennzeichnet, dass** der Betriebszustand Bremsbetrieb mit Motorbremse bei Vorliegen einer Drehzahl n₅ der Abgasnutzturbine unter Berücksichtigung des Übersetzungsverhältnisses in der Übertragungseinrichtung (16) größer als die Drehzahl der Kurbelwelle (4) erkannt wird und der Teillastbetrieb bzw. Schubbetrieb bei Vorliegen einer Drehzahl n₅ in der Abgasnutzturbine (5) unter Berücksichtigung des Übersetzungsverhältnisses in der Übertragungseinrichtung (16) von kleiner der Drehzahl n₄ der Kurbelwelle (4) unter Ausschluss des Volllastbetriebes erkannt wird.

9. Antriebstrang (1)
- mit einer Verbrennungskraftmaschine (3) umfassend eine Kurbelwelle (4);
- mit einer Abgasnutzturbine (5), die im Abgasstrom (7) der Verbrennungskraftmaschine (3) zur Umwandlung von Abgasenergie und Triebenergie angeordnet ist;
- die Abgasnutzturbine (5) ist über eine Übertragungseinrichtung (16) mit der Kurbelwelle (4) verbunden;
- in der Übertragungseinrichtung (16) ist eine hydrodynamische Kupplung (8) angeordnet, umfassend ein Primärrad (10) und ein Sekundärrad (9), wobei das Sekundärrad (9) mit der Kurbelwelle (4) und das Primärrad (10) mit der Abgasnutzturbine (5) wenigstens mittelbar gekoppelt ist;
**dadurch gekennzeichnet, dass** die hydrodynamische Kupplung (8) derart ausgeführt ist, dass diese geeignet ist, wenigstens entsprechend einer Kennlinie betrieben zu werden, deren übertragbares Moment unter Berücksichtigung des Übersetzungsverhältnisses in der Übertragungseinrichtung (16) dem minimal aufnehmbaren oder von der Abgasnutzturbine (5) abgebbaren Moment M_{Min-5} über einen Großteil des durch das Drehzahlverhältnis zwischen Primärschaufelrad und Sekundärschaufelrad charakterisierten Schlupfbereiches entspricht.

10. Antriebseinheit (1) nach Anspruch 9, **gekennzeichnet durch** folgende Merkmale:
10.1 die hydrodynamische Kupplung (8) ist als eine steuer- bzw. regelbare Kupplung mit veränderbaren Füllungsgrad ausgeführt;
10.2 mit einer, der hydrodynamischen Kupplung (8) zugeordneten Steuereinrichtung (20), umfassend ein Stellgrößenbildner zur Bildung einer Stellgröße zur Ansteuerung einer Stelleinrichtung (22) der hydrodynamischen Kupplung (8).

## Claims

1. A method for optimizing the engine braking effect in a drive unit (1), especially for use in motor vehicles
- with an internal combustion engine (3) comprising a crankshaft (4);
- with an exhaust gas utilization turbine (5) which is arranged in the exhaust gas stream (7) of the internal combustion engine (3) for converting exhaust gas energy into drive energy;
- the exhaust gas turbine (5) is connected with the crankshaft (4) via a transmission device (16);
- a hydrodynamic coupling (8) is arranged in the transmission device (16), comprising a primary wheel (10) and a secondary wheel (9), with the secondary wheel (9) being connected at least indirectly with the crankshaft (4) and the primary wheel (10) with the exhaust gas utilization turbine (5); **characterized by** the following features:
1.1 in which in an operational state which corresponds to the braking operation with engine braking the exhaust gas utilization turbine (5) is operated at an operating point (II) which is **characterized by** a maximum permissible limit speed nₘₐₓ₋₅ of the exhaust gas utilization turbine (5) at a minimum available torque M₅, and
1.2 in an operational state which corresponds to part-load operation or thrust operation the exhaust gas utilization turbine (5) is operated at an operating point (I) which is **characterized by** a minimum speed nₘᵢₙ₋₅ and a minimum available torque Mₘᵢₙ₋₅, with the setting of the two operating points occurring via the hydrodynamic coupling (8), which is configured in such a way that the same is suitable to be operated according to at least one characteristic whose transferable torque corresponds to the available or absorbable torque Mₘᵢₙ₋₅ via a major part of the speed difference characterizing the slip range by considering the gear ratio in the transmission device (16) to the exhaust gas utilization turbine (5).

2. A method according to claim 1, **characterized in that** a hydrodynamic coupling (8) with constant filling FG is used whose characteristic for this degree of filling FG is **characterized by** a torque curve which lies over a major part of the slip range in the area of the minimum torque Mₘᵢₙ₋₅ to be absorbed or provided by the exhaust gas utilization turbine (5) by taking into account the gear ratio in the transmission device (16).

3. A method according to claim 1, **characterized in that** a hydrodynamic coupling (8) is used whose degree of filling FG is can be controlled and/or regulated.

4. A method according to claim 3, **characterized in that** the open-loop and/or closed-loop control of the degree of filling FG occurs depending on at least one of the following variables:
- pressure at an inlet (17) into the working chamber (11) of the hydrodynamic coupling (8) and/or at an outlet (18) from the working chamber (11) of the hydrodynamic coupling (8);
- pressure difference (Δₚ) between inlet (17) and outlet (18) from the working chamber (11);
- volume flow at the inlet (17) and/or outlet (18) from the working chamber (11);
- quantity of operating medium discharged by way of mechanical units, e.g. scooping pipes.

5. A method according to one of the claims 1 to 4, **characterized in that** the setting of the operating points (I, II) occurs by open-loop control of the speed n₅ or a variable of the exhaust gas utilization turbine (5) which characterizes the same at least indirectly.

6. A method according to one of the claims 1 to 4, **characterized in that** the setting of the operating points (I, II) occurs by closed-loop control of the speed n₅ or a variable of the exhaust gas utilization turbine (5) which characterizes the same at least indirectly.

7. A method according to claim 6, which characterizes in that a variable characterizing the actual speed of the exhaust gas utilization turbine (5) at least indirectly is determined continuously and is compared with the setpoint speed nₛₒₗₗ₋₅ to be set, with an actuating variable for triggering the hydrodynamic coupling (8) being predetermined depending on the control deviation.

8. A method according to one of the claims 1 to 7, **characterized in that** the operating state of braking operation with engine brake is recognized as being higher than the speed of the crankshaft (4) in the presence of a speed n₅ of the exhaust gas utilization turbine by taking into account the gear ratio in the transmission device (16) and the part-load operation or thrust operation is recognized in the presence of a speed n₅ in the exhaust gas utilization turbine (5) by taking into account the gear ratio in the transmission device (16) of the smaller speed n₄ of the crankshaft (4) under exclusion of full-load operation.

9. A drive train (1),
- with an internal combustion engine (3) comprising a crankshaft (4);
- with an exhaust gas utilization turbine (5) which is arranged in the exhaust gas stream (7) of the internal combustion engine (3) for converting exhaust gas energy and drive energy;
- the exhaust gas turbine (5) is connected via a transmission device (16) with the crankshaft (4);
- the exhaust gas turbine (5) is connected via a transmission device (16) with the crankshaft (4);
- a hydrodynamic coupling (8) is arranged in the transmission device (16), comprising a primary wheel (10) and a secondary wheel (9), with the secondary wheel (9) being coupled with the crankshaft (4) at least indirectly and the primary wheel (10) with the exhaust gas utilization turbine (5); **characterized in that** the hydrodynamic coupling (8) is arranged in such a way that the same is suitable to be operated at least according to a characteristic whose transferable torque corresponds under consideration of the gear ratio in the transmission device (16) to the torque which is available as a minimum or can be supplied by the exhaust gas utilization turbine (5) over a major part of the slip range **characterized by** the speed ratio between primary blade wheel and secondary blade wheel.

10. A drive unit (1) according to claim 9, **characterized by** the following features:
10.1 the hydrodynamic coupling (8) is arranged as a coupling with a changeable degree of filling which can be controlled or regulated;
10.2 with a control device (20) associated with the hydrodynamic coupling (8), comprising an actuating variable generator for generating an actuating variable for triggering an actuating device (22) of the hydrodynamic coupling (8).

## Revendications

1. Procédé d'optimisation de l'effet du frein moteur dans une unité motrice (1), notamment pour l'utilisation dans des véhicules automobiles
- avec un moteur à combustion interne (3) comprenant un vilebrequin (4),
- avec une turbine de récupération des gaz d'échappement (5) disposée dans le flux des gaz d'échappement (7) du moteur à combustion interne (3) pour convertir l'énergie des gaz d'échappement en énergie motrice ;
- la turbine de récupération des gaz d'échappement (5) est reliée au vilebrequin (4) par l'intermédiaire d'un système de transmission (16) ;
- dans le système de transmission (16) est disposé un coupleur hydrodynamique (8), comprenant une roue primaire (10) et une roue secondaire (9), la roue secondaire (9) étant couplée au vilebrequin (4) et la roue primaire (10) à la turbine de récupération des gaz d'échappement (5), du moins indirectement ;
**caractérisé par** les particularités suivantes :
1.1 selon lequel, dans un état de fonctionnement correspondant au mode frein moteur, la turbine de récupération des gaz d'échappement (5) fonctionne en un point de fonctionnement (II) **caractérisé par** une vitesse limite admissible maximum nₘₐₓ₋₅ de la turbine de récupération des gaz d'échappement (5) avec un couple minimum M₅ susceptible d'être délivré et
1.2 dans un état de fonctionnement correspondant à la charge partielle ou au mode de freinage à inertie, la turbine de récupération des gaz d'échappement (5) fonctionne en un point de fonctionnement (I) **caractérisé par** une vitesse minimum nₘᵢₙ₋₅ et par un couple minimum susceptible d'être absorbé Mₘᵢₙ₋₅, le réglage des deux points de fonctionnement se faisant par le coupleur hydrodynamique (8) qui est réalisé de manière à être adapté à fonctionner en fonction d'au moins une caractéristique dont le couple transmissible correspond, sur une grande partie de la différence de vitesse caractérisant la plage de glissement, au couple minimum Mₘᵢₙ₋₅ apte à être délivré ou absorbé par la turbine de récupération des gaz d'échappement (5), compte tenu du rapport des éléments de transmission dans le système de transmission (16) par rapport à la turbine de récupération des gaz d'échappement (5).

2. Procédé selon la revendication 1, **caractérisé en ce qu'**un coupleur hydrodynamique (8) à remplissage constant FG est utilisé dont la caractéristique pour ce degré de remplissage FG est **caractérisée par** une courbe de couple qui est, sur une grande partie de la plage de glissement, de l'ordre du couple minimal Mₘᵢₙ₋₅ susceptible d'être absorbé ou délivré par la turbine de récupération des gaz d'échappement (5), compte tenu du rapport de transmission dans le système de transmission (16).

3. Procédé selon la revendication 1, **caractérisé en ce qu'**un coupleur hydrodynamique (8) est utilisé dont le degré de remplissage FG est pilotable ou réglable.

4. Procédé selon la revendication 3, **caractérisé en ce que** le degré de remplissage FG est piloté et/ou réglé en fonction d'au moins une des grandeurs suivantes :
- pression à une entrée (17) dans l'enceinte de travail (11) du coupleur hydrodynamique (8) et/ou à une sortie (18) de l'enceinte de travail (11) du coupleur hydrodynamique (8)
- différence de pression (Δₚ) entre l'entrée (17) et la sortie (18) de l'enceinte de travail (11)
- flux volumique à l'entrée (17) et/ou à la sortie (18) de l'enceinte de travail (11)
- la quantité de fluide de travail évacué par des groupes mécaniques, par exemple des tubes d'aspiration.

5. Procédé selon l'une quelconque des revendications 1 à 4, **caractérisé en ce que**, pour régler les points de fonctionnement (I, II), on pilote la vitesse n₅ ou une grandeur de la turbine de récupération des gaz d'échappement (5) caractérisant du moins indirectement cette vitesse.

6. Procédé selon l'une quelconque des revendications 1 à 4, **caractérisé en ce que**, pour régler les points de fonctionnement (I, II), on règle la vitesse n₅ ou une grandeur de la turbine de récupération des gaz d'échappement (5) caractérisant du moins indirectement cette vitesse.

7. Procédé selon la revendication 6, **caractérisé en ce qu'**une grandeur caractérisant du moins indirectement la vitesse effective de la turbine de récupération des gaz d'échappement (5) est déterminée en continu et est comparée à la vitesse désirée nₛₒₗₗ₋₅ qu'il y a lieu de régler, une grandeur réglante pour l'activation du coupleur hydrodynamique (8) étant imposée en fonction de l'écart de réglage.

8. Procédé selon l'une quelconque des revendications 1 à 7, **caractérisé en ce que** l'état de fonctionnement en mode frein moteur est repéré à une vitesse n₅ de la turbine de récupération des gaz d'échappement, compte tenu du rapport de transmission dans le système de transmission (16) supérieur à la vitesse de rotation du vilebrequin (4) et que le mode de fonctionnement en charge partielle ou en freinage à inertie est repéré à une vitesse n₅ dans la turbine de récupération des gaz d'échappement (5), tenu compte du rapport de transmission dans le système de transmission (16) inférieur à la vitesse de rotation n₄ du vilebrequin (4), le mode de fonctionnement à pleine charge étant exclu.

9. Groupe motopropulseur (1)
- avec un moteur à combustion interne (3) comprenant un vilebrequin (4) ;
- avec une turbine de récupération des gaz d'échappement (5) disposée dans le flux des gaz d'échappement (7) du moteur à combustion interne (3) et destinée à convertir de l'énergie de gaz d'échappement en énergie motrice ;
- la turbine de récupération des gaz d'échappement (5) est reliée au vilebrequin (4) par l'intermédiaire d'un système de transmission (16) ;
- un coupleur hydrodynamique (8) est disposé dans le système de transmission (16), ce coupleur comprenant une roue primaire (10) et une roue secondaire (9), la roue secondaire (9) étant couplée au vilebrequin (4) et la roue primaire (10), à la turbine de récupération des gaz d'échappement (5), du moins indirectement ;
**caractérisé en ce que** le coupleur hydrodynamique (8) est réalisé de manière à être adapté pour fonctionner du moins en fonction d'une caractéristique dont le couple transmissible correspond au couple minimum Mₘᵢₙ₋₅ apte à être absorbé ou délivré par la turbine de récupération des gaz d'échappement (5) sur une grande partie de la plage de glissement **caractérisée par** le rapport de vitesse entre la roue à pales primaire et la roue à pales secondaire, compte tenu du rapport de transmission dans le système de transmission (16).

10. Groupe motopropulseur (1) selon la revendication 9, **caractérisé par** les particularités suivantes :
10.1 le coupleur hydrodynamique (8) est réalisé sous forme de coupleur apte à être piloté ou réglé avec un degré de remplissage apte à être modifié ;
10.2 avec un organe de commande (20) associé au coupleur hydrodynamique (8), comprenant un générateur de grandeur réglante destiné à générer une grandeur réglante pour activer un servomécanisme (22) du coupleur hydrodynamique (8).
